(19) Europäisches Patentamt
European Patent Office
Office européen des brevets

(11) Veröffentlichungsnummer: **0 135 150**
**B1**

# (12) EUROPÄISCHE PATENTSCHRIFT

(45) Veröffentlichungstag der Patentschrift: **08.08.90**

(51) Int. Cl.$^5$: **C 08 G 73/10**

(21) Anmeldenummer: **84109742.1**

(22) Anmeldetag: **16.08.84**

## (54) Neue Polyimide und ein Verfahren zu ihrer Herstellung.

(30) Priorität: **26.08.83 DE 3330768**

(43) Veröffentlichungstag der Anmeldung:
**27.03.85 Patentblatt 85/13**

(45) Bekanntmachung des Hinweises auf die Patenterteilung:
**08.08.90 Patentblatt 90/32**

(84) Benannte Vertragsstaaten:
**DE FR GB IT NL**

(56) Entgegenhaltungen:
**DE-A-1 795 638**

**CHEMICAL ABSTRACTS, Band 88, Nr. 12, 20. Maerz 1978, Seiten 25,26, Zusammenfassung Nr. 74889k, Columbus, Ohio, US; A.A. BERLIN et al.: "Polymerizable aromatic oligoimides"; & SU - A - 584 014, & OTKRYTYA, ISOBRET., PROM. OBRAZTSY, TOVARNYE ZNAKI 1977, 54(46), 56-57**

(73) Patentinhaber: **BAYER AG**
**D-5090 Leverkusen 1 Bayerwerk (DE)**

(72) Erfinder: **Lindner, Christian, Dr.**
**Riehler Strasse 200**
**D-5000 Köln 60 (DE)**
Erfinder: **Korte, Siegfried, Dr.**
**Bamberger Strasse 6**
**D-5090 Leverkusen 1 (DE)**
Erfinder: **Stix, Wolfgang, Dr.**
**Freudenbergstrasse 56b**
**D-6901 Neckarsteinach (DE)**
Erfinder: **Süling, Carlhans, Dr.**
**Carl-Leverkus-Strasse 10**
**D-5068 Odenthal (DE)**
Erfinder: **Ott, Karl-Heinz, Dr.**
**Paul-Klee-Strasse 54**
**D-5090 Leverkusen (DE)**

(56) Entgegenhaltungen:
**CHEMICAL ABSTRACTS, Band 76, Nr. 24, 12. Juni 1972, Seiten 2,3, Zusammenfassung Nr. 144580v, Columbus, Ohio, US; Y. MUSA et al.: "Synthesis of polyimides by photoaddition of bismaleimides to benzene", & J. POLYM. SCI., PART. A-1, 1972, 10(2), 319-327**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 135 150 B1

(56) Entgegenhaltungen:

**CHEMICAL ABSTRACTS, Band 81, Nr. 14, 7. Oktober 1985, Seiten 2,3, Zusammenfassung Nr. 78281j, Columbus, Ohio, US; B.A. ZHUBANOV et al.: "Diels-Alder condensation of mixed polyimides", & IZV. AKAD. NAUK. KAZ. SSR, SER. KHIM. 1974, 24(2), 78-81**

**Beschreibung**

Die Erfindung betrifft neue Polyimide und ein Verfahren zu ihrer Herstellung. Sie können zu Formkörpern oder Formmassen weiterverarbeitet werden.

Die Diels-Alder-Cycloaddition ist in der niedermolekularen Chemie eine übliche Synthesemethode. Im Gegensatz dazu lassen sich durch Poly-Diels-Alder-Cycloaddition nur schwierig Polymere herstellen. Durch solche Umsetzungen mit Bis-maleinimiden als Dienophile wurden bisher nur einige spezielle, hochtemperaturbeständige Polymerisate hergestellt (z.B. Advances Chem. Ser. 91 (1969), S. 628—642, Vysokomol. Soed. 12 (19870), Serie B, Nr. 4, S. 277, J. Polym. Sci. A-1, Polymer Chemistry 10 (1972), Nr. 2, S. 319). Aus der DE—A—1 795 638 ist bekannt, aus speziellen Dianhydriden und Diaminen N-Phenyl-amidimid-polymere herzustellen. Jedoch sind solche Polymere entweder unlöslich oder thermoplastisch nicht verarbeitbar. Weiterhin sind die Ausgangsmaterialien schwierig herzustellen und daher für eine großtechnische Nutzung nicht verwendbar.

Technisch verwendbare Polyimide, Polykondensate von Tetracarbonsäurehalbestern, sind aus der BE—PS 654 850 bekannt. Diese haben andere Eigenschaften als Polyimide aus einer Poly-Diels-Alder-Umsetzung.

Es wurde nun gefunden, daß man durch Polycycloaddition von Bismaleinimiden mit speziellen Bis-Butadienylmonocarbonsäurederivaten Polyimide mit besonderen Eingenschaften herstellen kann. Je nach Gehalt an eingebauten Imidstrukturen weisen sie unterschiedliche technologische Eigenschaften auf. Diese Polyimide lassen sich selektiv hydrieren oder dehydrieren, wodurch ihre Eigenschaften modifiziert werden können.

Gegenstand der Erfindung sind somit zu Formkörpern verarbeitbare Polymer mit eingebauten Struktureinheiten der Formel (I):

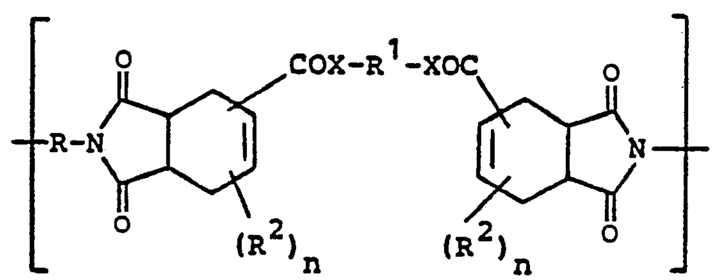

(I),

in welcher

X für —O—, —S—, —NY—, vorzugsweise —O— oder —NY— steht,

Y H, $C_{1-3}$-Alkyl, $C_{6-10}$ Aryl, vorzugsweise H, $CH_3$, Phenyl,

n eine ganze Zahl von 0 bis 3, vorzugsweise 0 und 1 und

$R^2$ H, $C_{1-3}$-Alkyl, $C_{6-10}$ Aryl, Halogen, $C_{1-3}$-Alkoxy, vorzugsweise $CH_3$—, $CH_3O$-Phenyl, Cl und Br, bedeutet und

R und $R^1$ für einen bivalenten organischen, niedermolekularen, oligomeren oder polymeren Rest stehen.

Als organische Reste R und $R^1$ können beispielsweise gesättigte oder ungesättigte Alkylenreste mit 2 bis 30 C-Atomen, vorzugsweise 2 bis 20 C-Atomen, aromatische Reste mit 6 bis 60 C-Atomen, vorzugsweise 6 bis 18 C-Atomen in Betracht kommen, wobei diese Reste in der Kette durch Heteroatome wie N, S, O, P ein- oder mehrfach unterbrochen sein können.

R steht vorzugsweise für einen Alkylenrest mit 2 bis 20 C-Atomen, Polyolefinrest mit einem Molekulargewicht von 500 bis 3000, oder Arylenrest mit 6 bis 18 C-Atomen. Weiterhin sind die Reste R und $R^2$ vorzugsweise unterschiedlich.

Oligomere oder polymere Reste $R^1$ können z.B. Reste eines Polyesters, Polyethers, Polysulfons, Polycarbonats, Polyurethans, Polyacetals, Polyamids, Polysulfids, eines Co- oder Homopolymerisats eines olefinisch ungesättigten, radikalischen polymerisierbaren Monomeren, insbesondere eines Monomeren wie Acrylnitril, Styrol, konjugiertes Dien, (Meth)-acrylat, 1-Olefin sein. Besonders bevorzugt sind Reste $R^1$ die sich von Polycarbonaten, Polyestern oder Polyamiden ableiten.

Beispielsweise seien folgende oligomeren oder polymeren Reste $R^1$ genannt:

Reste von Polybutylen- oder Polyethylenterephthalaten, von Polyphenylenoxiden, von Polytetramethylenoxiden, von aromatischen Polysulfonen oder Polyethersulfonen, von Bisphenol-A-polycarbonat, von Polyurethanen aus Polyester- oder Polyetherdiolen und Hexamethylendiisocyanat oder aromatischen Diisocyanaten, von Polymethylenoxid, von Polyphenylensulfiden, von Poly-p-Aminobenzoesäureamiden, von Polyamiden aus 1,6-Hexamethylendiamin und C2—12-Alkylendicarbonsäuren, von Polycaprolactonen oder Polycaprolactamen, sowie Reste von Polyethylen, von

Polystyrolen, von Polybutadien, die partiell hydriert sein könen, oder von Copolymeren aus Butadien mit Acrylnitril oder Styrol.

Bevorzugte niedermolekulare Reste $R^1$ entsprechen den Formeln (VI), (VII) oder (VIII),

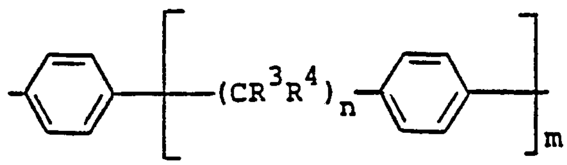

(VI),

in welcher

$R^3$ und $R^4$ für Wasserstoff, einen Alkylrest mit 1 bis 3 C-Atomen, Halogen wie F, Cl bedeutet,

n für eine ganze Zahl von 1 bis 8 steht, wobei für den Fall, daß n für eine Zahl von 2 bis 8 steht, die Reste $R^3$ und $R^4$ an benachbarten C-Atomen auch für eine zusätzliche einfache Bindung stehen können und

m für die Zahl 0, 1, 2 oder 3 steht,

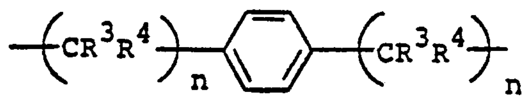

(VII),

in welcher

$R^3$, $R^4$ und n die bei Formel (VI) angegebene Bedeutung besitzen

oder

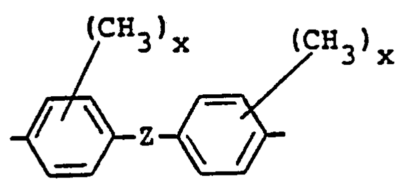

(VIII),

in welcher

Z für —O—, —S—, —COO—, —CONH—, —SO—, —$SO_2$—, vorzugsweise —O—, —S— und —COO— steht und

X für die Zahl 0, 1 oder 2 steht.

Beispielsweise seien folgende niedermolekulare Reste $R^1$ genannt:

Ethylen-, 1,3-Propylen-, 1,6-Hexamethylen-, Phenylen-, p-Biphenylen-, Diethylenether-, Ditetramethylenether-, 4,4'-Diphenylpropan(2,2)-, 4,4'-Diphenylmethan-, -ether-, -thioether-, -sulfon-, -sulfoxid-, -phosphesäureester-, die gegebenenfalls an den Aromaten mit 1 oder 2 Methyl- oder Halogengruppen (z.B. Chlor, Brom) substituiert sein können, 1,4-Diethylenbenzol-, 1,4-Diphenylbenzol-, 4,4'-Benzoesäurephenylester-, 4,4'-Benzoesäurephenylamid-Reste, oder Reste, die sich von heterocyclischen Gruppen ableiten, wie z.B. Reste von Phthalsäureimiden.

Die erfindungsgemäßen Polymeren sind in der Hauptkette im wesentlichen linear aufgebaut und besitzen Molekulargewichte größer 1000, bevorzugt größer 5000 bis 50000. Falls die Reste R und $R^1$ selbst höhermolekular sind, können die erfindungsgemäßen Polymeren Molekulargewichte von mehr als 200000 annehmen. Die erfindungsgemäßen Polymeren besitzen unterschiedliche Löslichkeiten in verschiedenen Lösungsmitteln. Bevorzugt sind Polymere mit guter Löslichkeit in polaren organischen oder anorganischen Lösungsmitteln. Solche Lösungsmittel sind z.B.: Amide wie Dimethylformamid, Sulfone wie N-Methylpyrrolidon, (Halogen) Kohlenwasserstoffe wie Chlorbenzol, Chloroform, Methylenchlorid, Alkohole wie Kresol, Phenol, Säuren wie konzentrierte Schwefelsäure, Ether wie Dioxan, Ketone wie Aceton etc..

Ein weiterer Gegenstand der Erfindung ist ein Verfahren zur Herstellung der Polymeren der Formel (I), dadurch gekennzeichnet, daß Bis-Maleinimide der Formel (II)

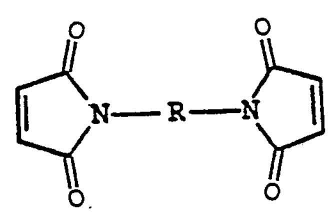

(II),

in welcher
R die bei Formel (I) angegebene Bedeutung hat, gegebenenfalls unter Katalyse, mit einem Bis-Butadienyl-carbonsäurederivat der Formel (III)

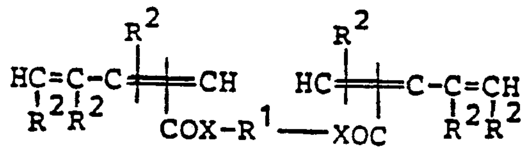

(III),

in welcher
$R^1$, $R^2$ und X die bei Formel (I) angegebene Bedeutung hat,
unter Polyaddition zu den erfindungsmäßen Polymeren umgesetzt werden.

Bevorzugte Verbindungen (II) sind Umsetzungsprodukte aus Aminoverbindungen mit zwei $NH_2$-Gruppen und Maleinsäureanhydrid. Zur Umsetzung mit Maleinsäureanhydrid werden vorzugsweise folgende Diamine eingesetzt:

$NH_2$—(C 2—8-Alkylen)-$NH_2$
$NH_2$—(C 6—18-Arylen)-$NH_2$
$NH_2$—$C_6H_4$—(C 1—8-Alkylen)—$C_6H_4$—$NH_2$
$NH_2$—(C 1—4-Alkylen)—$C_6H_4$—(C 1—4-Alkylen)—$NH_2$,

wobei die Phenylenreste —$C_6H_4$- gegebenenfalls mit bis zu 2 $CH_3$-Gruppen substituiert sein können.

Bevorzugte Verbindungen (III) sind Bis-Butadienylmonocarbonsäureester, -amide, -thioester, besonders bevorzugt-ester oder -amide wie die Bis-Sorbinsäureamide der oben beschriebenen Diamine oder die Bis-Sorbinsäureester von Diolen bzw. OH-enthaltenden Polymeren oder von Diaminen bzw. $NH_2$-enthaltenden Polymeren, vorzugsweise die Bis-Sorbinsäureester von Polymeren, Polyadditionprodukten oder Polykondensaten mit endständigen OH-Gruppen oder Amino-Gruppen. Zur Umsetzung mit Sorbinsäure werden folgende Diole oder Diamine vorzugsweise verwendet:

HO—(C 2—20-Alkylen)-OH
$NH_2$—(C 2—20-Alkylen)—$NH_2$

HO—(C 6—18-Arylen)—OH
$NH_2$—(C 6—18-Arylen)—$NH_2$

HO—(C 1—5-Alkylen)—$C_6H_4$—(C 1—5-Alkylen)—OH
$NH_2$—(C 1—5-Alkylen)—$C_6H_4$—(C 1—5-Alkylen)—$NH_2$

HO—$C_6H_4$—Z—$C_6H_4$—OH, wobei Z die bei Formel (VIII) angegebene Bedeutung hat, oder $NH_2$—$C_6H_4$—Z—$C_6H_4$—$NH_2$, wobei Z die bei Formel (VIII) angegebene Bedeutung hat, wobei Phenylenreste (—$C_6H_4$—) gegebenenfalls bis zu 2 $CH_3$-Gruppen als Substituenten tragen können.

Bevorzugte polymere Sorbinsäureesterderivate sind Polycarbonat- oder Polyester-sorbinate z.B. (2,2-Bis-(4-hydroxyphenyl)-propan)polycarbonat-, (Bisphenol-A-polycarbonat-), Sorbinate von Polyestern an Bisphenol A und Iso- und/oder Terephthalsäure, Polyterephthalsäureethylenglykolester-sorbinate, Polybutylenterephthalatsorbinate.

Zur Herstellung der erfindungsgemäßen Polymeren werden die Komponenten (II) und (III) in üblicher Weise in äquimolaren Mengenverhältnissen umgesetzt. Durch Einsetzen mit einem Überschuß einer der Komponenten kann u.a. das Molekulargewicht der Polyadditionspolymeren beeinflußt werden. Die Endgruppen sowie das Molekulargewicht der Polymeren kann insbesondere durch Zusatz geringer Mengen monofunktioneller Maleinimide bzw. Butydienylcarbonsäurederivate beeinflußt werden. Vorzugsweise werden in diesem Falle N-Phenyl- oder N-Cyclohexylmaleinimid oder Sorbinsäure oder Sorbinsäureester oder -amide eingesetzt.

Während man bei dem Einsatz von niedermolekularen Ausgangskomponenten zur Herstellung der erfindungsgemäßen Polymeren durchweg nahezu äquimolar arbeitet und das Molekulargewicht durch die oben genannten Maßnahmen beispielsweise regeln kann, kann es vorteilhaft sein, beim Einsatz hochmolekularer Ausgangsstoffe der Struktur (II) und (III) eine der Komponenten im Überschub einzusetzen. Dieser Überschuß hängt ab vom Molekulargewicht und der molekularen Einheitlichkeit der polymeren Ausgangsverbindungen. Normalerweise ist aber als oberste Grenze des Verfahrens ein Arbeiten mit molaren Verhältnissen der Ausgangskomponente von (II) : (III) = 1 : 2 bis 2 : 1 zu nennen.

Die Polyaddition wird bevorzugt katalysiert. Bevorzugte Katalysatoren sind Protonensäuren (z.B. HCl, $H_2SO_4$, aromatische Sulfonsäuren, Carbonsäuren), saure Ionenaustauscherharze, Verbindungen die unter dem Umsetzungsbedingungen als Lewissäuren wirken, z.B. $ZnCl_2$, $AlCl_3$, Ti-Alkoholate, $FeCl_2$ usw. Die Katalysatoren werden vorzugsweise in Mengen von etwa 10 ppm bis 2 Gew.-%, bezogen auf die Reaktanten, eingesetzt.

Das erfindungsgemäße Verfahren kann in der Schmelze, in Lösung oder in Dispersion durchgeführt werden. Bevorzugt ist die Umsetzung in Lösung oder in einem Kombinationsverfahren aus Masse/

Lösungspolyaddition oder aus Masse/Dispersionspolyaddition.

Bevorzugte Lösungsmittel sind polare organische Lösungsmittel, insbesondere Ether wie Dioxan und hochsiedende Polyether, Amide wie Dimethylformamid, Dimethylacetamid und Phosphorsäureamide und N-Methylpyrrolidon, Aromaten wie Halogenbenzole, oder aliphatische, hochsiedende Kohlenwasserstoffe.

Das erfindungsgemäße Verfahren wird bei Temperaturen von 50—300°C durchgeführt, vorzugsweise bei 60 bis 200°C.

Um hohe Monomerumsätze zu erreichen, kann es vorteilhaft sein, die Polyaddition bei Temperaturen von unter 110°C zu beginnen und im Laufe der Reaktion auf Temperaturen von 100—200°C zu steigern.

Die Qualität der Polymeren hängt von den gewählten Umsetzungsbeindungen, z.B. von der Umsetzungstemperatur ab. In bestimmten Fällen, z.B. bei Verwendung eines Katalysators kann es vorteilhaft sein, bei relativ niedriger Temperatur die Umsetzung auszuführen. Weiterhin kann der Zusatz üblicher Antioxidantien und Inhibitoren (z.B. Hydrochinon, 2,6-Di-tert-butylphenole, Triphenylphosphite, etc.), gegebenenfalls in Kombination mit üblichen Reduktionsmitteln (z.B. Phosphite, Thioether, Aldehyde) zur Umsetzungsmischung, die Qualität des herzustellenden Polymeren günstig beeinflußen.

Die erfindungsgemäßen Polymeren der Formel (I) enthalten Struktureinheiten, die sich vom Cyclohexen ableiten. Diese Struktureneinheiten können durch geeignete Maßnahmen zu gesättigten Cyclohexanstrukturen hydriert werden. Sie können auch durch andere Maßnahmen dehydriert werden, so daß aromatische Benzolstrukturen entstehen.

Die Polymeren mit hydrierten Struktureinheiten können durch die Formel (IV) wiedergegeben werden

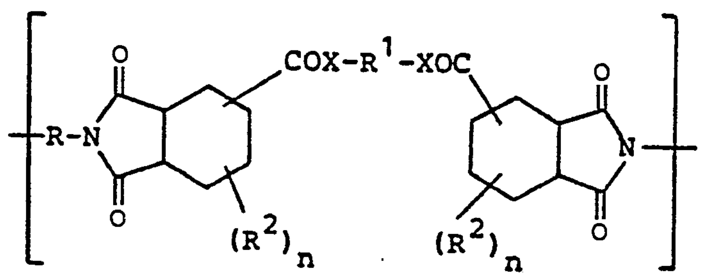

(IV),

in welcher

R, $R^1$, $R^2$, X und n die bei Formel (I) angegebene Bedeutung haben.

Die Polymeren mit dehydrierten, aromatischen Benzolstrukturen können durch die Formel (V) wiedergegeben werden.

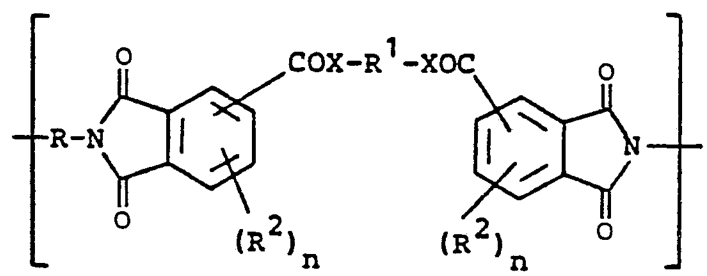

(V),

in welcher

R, $R^1$, $R^2$, X und n die bei Formel (I) angegebene Bedeutung haben.

Die Polymeren mit eingebauten Struktureinheiten (IV) oder (V) werden aus Polymeren mit eingebauten Struktureinheiten (I) durch Hydrierung der Doppelbindung der Cyclohexenstruktur oder durch Dehydrierung der Cyclohexenstruktur hergestellt. Die Hydrierungs- oder Dehydrierungsreaktionen der erfindungsgemäßen Polymeren der Struktureinheit (I) verlaufen nahezu vollständig. Diese Reaktionen können auch partiell ausgeführt werden. In diesem Falle liegen dann in den Polymeren Struktureinheiten (I) neben Struktureinheiten (IV) bzw. (VI) vor.

Zur erfindungsgemäßen Hydrierung können bekannte Hydrierungsverfahren herangezogen werden, insbesondere katalytische Hydrierungen in Anwesenheit beispielsweise von Schwarz-Katalysatoren, Adams-Katalysatoren, Raney-Katalysatoren, Trägerkatalysatoren sowie Oxid- bzw. Sulfidkatalysatoren. Trägerkatalysatoren sind vorzugsweise solche die sich leicht abtrennen lassen, z.B. Pd- oder Pt-Katalysatoren auf Trägermaterialien wie Kohle, $SiO_2$, $Al_2O_3$, sowie Sulfate von Erdalkalimetallen. Vorzugsweise werden solche Katalysatoren in möglichst geringer Menge, bezogen auf das zu hydrierende Produkt eingesetzt, in besonderen in Mengen kleiner 10 Gew.-%.

Vorzugsweise wird die Hydrierung in Lösung durchgeführt, vorzugsweise im sauren Medium. Als Lösungsmittel kommen polare organische Lösungsmittel, in denen sich das Polymer löst, in Frage, zum Beispiel Ether wie Dioxan, Säuren, flüssige Carbonsäureamide. Vorzugsweise wird die Hydrierung in dem

Lösungsmittel durchgeführt, in dem die Herstellung des Polymeren der Formel (I) durchgeführt wurde. In besonderen Fällen kann die Hydrierung ohne Lösungsmittel durchgeführt werden.

Die Hydrierung wird vorzugsweise bei einer Temperatur von 50—200°C durchgeführt. Der Wasserstoffdruck beträgt im allgemeinen etwa 1 bis 200 bar.

Will man an den Polymeren eine partielle Hydrierung der olefinischen Doppelbindungen erreichen, so kann dies durch die Wasserstoffmenge, Druck oder Temperatur gesteuert werden.

Die Dehydrierung der erfindungsgemäßen Polymeren mit Struktureinheiten (I) kann ebenfalls nach bekannten Verfahren erfolgen. Vorzugsweise erfolgt die Dehydrierung in flüssiger Phase in Gegenwart von Katalysatoren, insbesondere Edelmetallkatalysatoren. Als Lösungsmittel sind beispielsweise zu nennen: Kohlenwasserstoffe wie Benzol, Toluol, Kresol, Phenol, Amide wie Ameisensäureamide, Ether wie Diethylether.

Die Dehydrierung kann auch mit Dehydrierungsmitteln wie Schwefel, Selen, Chinonen, Nitrobenzol, Fe-Salzen durchgeführt werden. Diese oder weitere bekannte Katalysatoren können in katalytischen Mengen, in stöchiometrischen Mengen, bezogen auf die zu dehydrierenden Molekülreste oder im Überschuß eingesetzt werden.

Die Dehydrierung findet bei Temperaturen von 100 bis etwa 350°C statt. Durch Auswahl des geeigneten Dehydrierungsmittels oder Katalysators, Variation der Temperatur, Reaktionszeit, kann ein unterschiedlicher Dehydrierungsgrad erreicht werden, d.h. es werden nicht unbedingt alle Cyclohexenstrukturen zu aromatischen Benzolstrukturen dehydriert.

Die erfindungsgemäßen Polymeren eignen sich in vielfältiger Weise zur Herstellung verschiedener Formkörper per mit interessanten anwendungstechnischen Eigenschaftskombinationen.

Die erfindungsgemäßen Polymeren lassen sich aus Lösung oder Schmelze zur Materialien hoher Wärmeformbeständigkeit und guter Spannungsrißkorrosionsbeständigkeit verarbeiten. Sie können insbesondere auf dem Thermoplast- oder Beschichtungssektor Verwendung finden.

Beschichtungen aus den erfindungsgemäßen Polymeren mit olefinischen Doppelbindungen können beispielsweise unter radikalischen Bedingungen, gegebenenfalls unter Mitverwendung von olefinisch ungesättigten Vinylmonomeren zu vernetzten, gehärteten Materialien umgesetzt werden. Diese können zum Versiegeln von Substratoberflächen wie Holz, Metall, Glas, Kunststoff usw. Verwendung finden.

Neben hoher Temperaturbeständigkeit weisen solche Produkte gute Beständigkeiten gegen aggressive Medien auf.

Hydrierung oder Dehydrierung der Polycycloadditionspolymeren kann in speziellen Fällen die Verarbeitungs- und Temperaturbeständigkeit der Polymeren erhöhen.

Geht man zur Herstellung der erfindungsgemäßen Polymeren von polymeren Bis-Butadienylcarbonsäurederivaten und/oder polymeren Bis-Maleinimiden aus, können blockartig aufgebaute Copolymere erhalten werden. Auch dadurch können die Eigenschaften der erfindungsgemäßen Polymeren, z.B. Elastizität, Härte, Festigkeiten und Modulverhalten, modifiziert werden.

Die erfindungsgemäßen Polymeren eignen sich zur Herstellung von Beschichtungen, Folien, Einkapselungsmaterialien, Dichtungen, Fäden, Platten, Formmassen, die durch Pressen, Extrusion, Spritzguß verarbeitbar sein können. Die erfindungsgemäßen Polymeren werden vorzugsweise in Kombination mit Antioxidantien, Verarbeitungshilfsmitteln (z.B. Gleitmittel, Extenderöle), anorganischen oder organischen Pigmenten, inerten Füllstoffen (insb. mit Fasermaterialien) zu Formkörpern verarbeitet.

## Beispiele

a) 16,64 Gew.-Teile Bis-Sorbinsäureester des Bisphenol A, 14,32 Gew.-Teile Bis-Maleinimid des p,p'-Diaminodiphenylmethans, 0,1 Gew.-Teile p-Toluolsulfonsäure, 0,3 Gew.-Teile phenolisches Antioxidanz (Ionol KB®) und 0,1 Gew.-Teile Dilauryldithiodipropinat (Irganox PS 800®) werden in 50 Gew.-Teile N-Methylpyrrolidon eingebracht. Unter Rühren und $N_2$-Athmosphäre läßt man 3,5 Stunden bei 80°C reagieren. Dann heizt man auf 90°C auf und führt die Polyaddition 3 Stunden bei dieser Temperatur fest. Anschließend werden 10 Gew.-Teile N-Methylpyrrolidon eingespeist und nochmals 1 Stunde bei 95°C gerührt. Dabei hat sich eine hochviskose Lösung gebildet. Nach Abkühlen und Verdünnen mit weiterem Lösungsmittel wird das Polymer mittels Isopropanol ausgefällt, gewaschen und getrocknet. Das Polymer besitzt einen Staudingerindex bei 25°C, in N-Methylpyrrolidon = NMP) von 0,55 dl/g. Das Polymer löst sich in N-Methylpyrrolidon, Phenol, Schwefelsäure und Dimethylformamid. Aus einer Lösung des Polymeren lassen sich Filme herstellen. Der Stickstoffgehalt des Polymeren beträgt 3,5 Gew.-%. IR (KBr) Absorptionsbanden bei 1760, 1710, 1510, 1380, 1100, 1170 $cm^{-1}$.

b) Beispiel a) wird wiederholt. Anstatt p-Toluolsulfonsäure werden 0,05 Gew.-Teile Trichloressigsäure eingesetzt. Das gebildete Polymer besitzt einen Staudingerindex von 0,60 dl/g (bei 25°C in NMP).

c) Beispiel a) wird ohne Säurezusatz wiederholt. Das gebildete Polymer weist nach gleicher Reaktionszeit einen Staudingerindex von 0,26 dl/g auf.

d) 28 Gew.-Teile Bis-Maleinsäureimid des 1,6-Hexamethylendiamins, 32 Gew.-Teile Bis-Sorbinsäureester des Bisphenols-A, 0,09 Gew.-Teile p-Toluolsulfonsäure und 0,4 Gew.-Teile Ionol KB(R) werden in 100 Gew.-Teilen Dimethylformamid gelöst. Bei 100°C wird 4 h gerührt. Anschließend steigert man die Reaktionstemperatur für eine Stunde auf 130°C. Das gebildete Polymer besizt einen Staudingerindex von 0,61 dl/g, (bei 25°C, in NMP).

e) 13,9 Gew.-Teile eines Bisphenol-A-polycarbonates mit terminalen Bisphenol-A-sorbinsäureesterendgruppen und einem Staudingerindex von 0,403 dl/g (in $CH_2Cl_2$ bei 25°C), 0,63 Gew.-Teile eines Bis-Maleinsäureimids des p,p'-Diaminodiphenylmethans und 0,3 Gew.-Teile phenolisches Antioxidans werden in 70 Gew.-Teilen Chlorbenzol bei 130°C gelöst. Nach 12 Stunden Reaktionszeit bei 130°C wird das gebildete Polycarbonatimid durch Verdampfen des Lösungstmittels isoliert. Das Polymer besitzt einen Staudingerindex von 0,59 dl/g (in $CH_2Cl_2$ bei 25°C).

f) 100 Gew.-Teile einer 15 Gew.%igen Lösung des Polymeren aus Beispiel a) in N-Methylpyrrolidon werden mit 0,4 Gew.-Teilen Benzoylperoxid und 1,5 Gew.-Teilen Triallylcyanurat versetzt. Aus der Lösung wird bei Temperaturen von 50°C ein Film hergestellt, der eine Stunde lang bei 130°C getempert wird. Dieser Film ist unlöslich in gebräuchlichen Lösungsmitteln und ist unempfindlich gegen gebräuchliche Kraftfahrstoffe, Reinigungsmittel und Öle.

g) 10 Gew.-Teile des Polymeren aus Beispiel c) werden in 100 Gew.-Teilen Dioxan gelöst. In Gegenwart von 1 Gew.-Teil $PtO_2$ und $H_2$ wird in einem Autoklaven bei 55°C hydriert. Die Hydrierung ist beendet, wenn die IR-Absorption des Polymeren zwischen 1600 und 1700 $cm^{-1}$ nicht weiter abnimmt. Nach Abfiltration des Katalysators und Ausfällung mit einem Ethanol/Wasser-gemisch wird das partiell hydrierte Polymer aus Beispiel c) erhalten.

h) 90 Gew.-Teile eines Bis-Sorbinsäureesters eines Polytetramethylenglycols mit einem durchschnittlichen Molekulargewicht von 800 und 14 Gew.-Teile Bis-Maleinimid aus p,p'-Diaminodiphenylmethan werden analog Vorschrift a) umgesetzt. Es wird ein Polymer guter Flexibilität erhalten, das einen Staudingerindex (gemessen in DMF bei 23°C) von [η] = 0,67 dl/g besitzt.

(DMF = Dimethylformamid)

**Patentansprüche**

1. Polymere mit einem Molekulargewicht von größer 1000 mit Struktureinheiten der Formel (I)

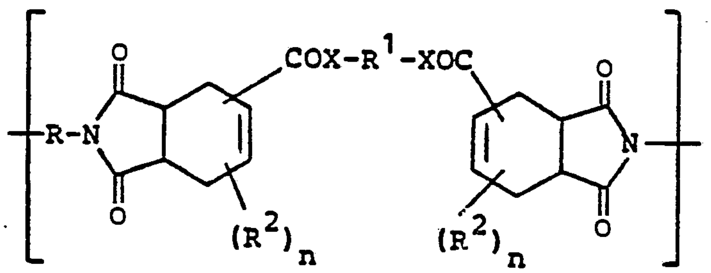

(I),

in welcher

X —O—, —S—, —NY—,

Y H, $C_{1-3}$-Alkyl, $C_{6-10}$-Aryl,

n eine ganze Zahl von 0 bis 3,

$R^2$ H, $C_{1-3}$-Alkyl, $C_{6-10}$-Aryl, Halogen, $C_{1-3}$-Alkoxy

bedeuten und

R und $R^1$ für einen bivalenten organischen niedermolekularen, oligomeren oder polymeren Rest stehen.

2. Verfahren zur Herstellung von Polymeren nach Anspruch 1, dadurch gekennzeichnet, daß Bis-Maleinimide der Formel (II)

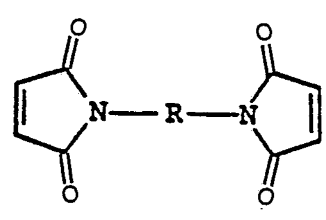

(II),

in welcher

R die in Anspruch 1 angegebene Bedeutung hat, gegebenenfalls unter Katalyse, mit einem Bis-Butadienylcarbonsäurederivat der Formel (III)

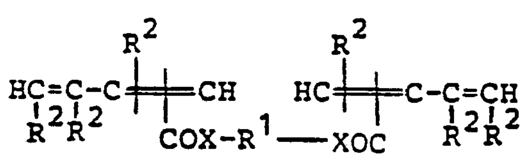

(III),

in welcher

R, $R^1$, $R^2$ und X die in Anspruch 1 angegebene Bedeutung haben, unter Polyaddition bei einer Temperatur von 50—300°C, zu den erfindungsgemäßen Polymeren umgesetzt werden.

3. Polymere mit einem Molekulargewicht von größer 1000 mit Struktureinheiten der Formel (IV)

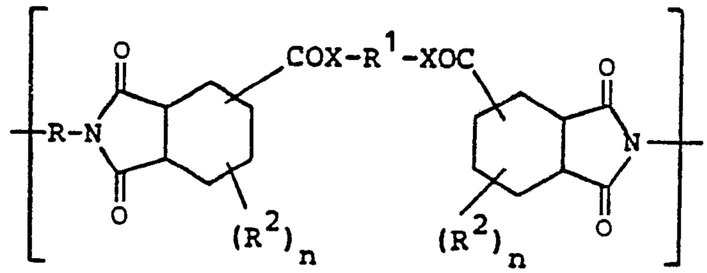 (IV),

in welcher

R, $R^1$, $R^2$, X und n die in Anspruch 1 angegebene Bedeutung haben.

4. Verfahren zur Herstellung von Polymeren mit Struktureinheiten der Formel (IV), dadurch gekennzeichnet, daß Polymere nach Anspruch 1 hydriert werden.

5. Polymere mit einem Molekulargewicht von größer 1000 mit Struktureinheiten der Formel (V)

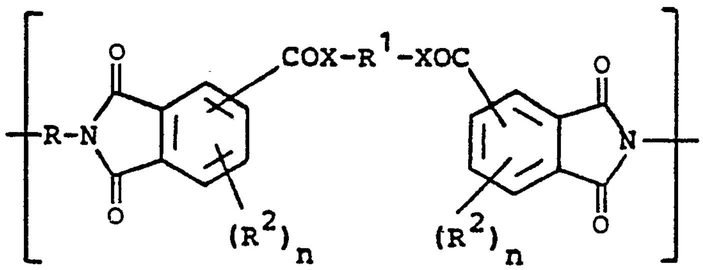 (V),

in welcher R, $R^1$, $R^2$, X und n die in Anspruch 1 angegebene Bedeutung haben, wobei für $R^1$ die Reste

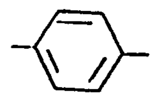 , 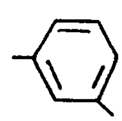 , 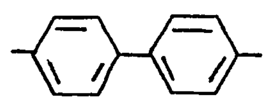 ,

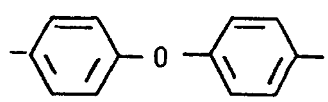 , 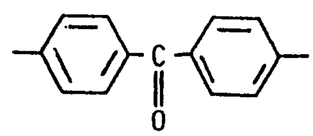 und

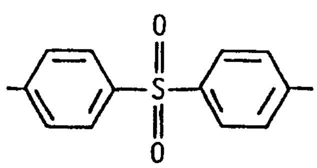

ausgenommen sind und der Rest $R^1$ kein niedermolekularer aromatischer Rest sein kann.

6. Verfahren zur Herstellung von Polymeren mit Struktureinheiten der Formel (V), dadurch gekennzeichnet, daß Polymere nach Anspruch 1 bei einer Temperatur von 100—350°C, dehydriert werden.

7. Verwendung von Polymeren nach Ansprüchen 1, 3 und 5 zur Herstellung von Folien, Überzügen und Formkörpern.

**Claims**

1. Polymers having a molecular weight above 1000 and containing structural units corresponding to formula (I)

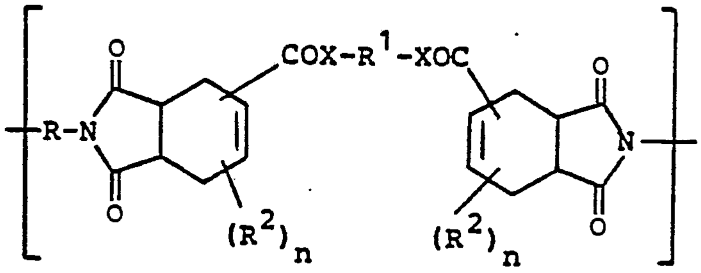

(I),

in which

X represents —O—, —S—, —NY—,

Y represents H, $C_{1-3}$ alkyl, $C_{6-10}$ aryl,

n is an integer of 0 to 3,

$R^2$ represents H, $C_{1-3}$ alkyl, $C_{6-10}$ aryl, halogen, $C_{1-3}$ alkoxy and

R and $R^1$ represent a difunctional organic, low molecular weight, oligomeric or polymeric group.

2. A process for the production of the polymers claimed in claim 1, characterized in that bis-maleic imides corresponding to formula (II)

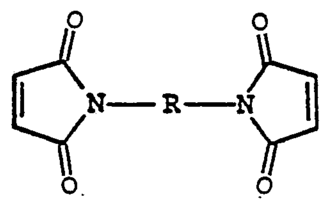

(II),

in which

R is as defined in claim 1, are reacted, optionally in the presence of catalysts, with a bis-butadienyl carboxylic acid derivative corresponding to formula (III)

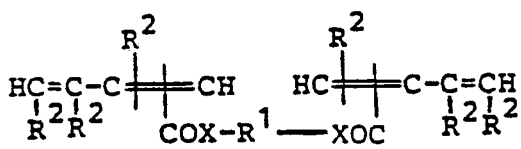

(III),

in which

R, $R^1$, $R^2$ and X are as defined in claim 1, in a polyaddition reaction at a temperature of 50 to 300°C to form the polymers according to the invention.

3. Polymers having an average molecular weight above 1000 and containing structural units corresponding to formula (IV)

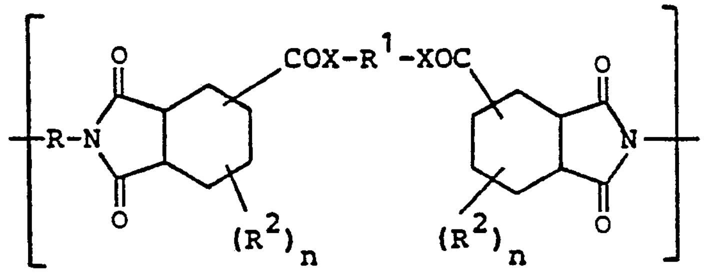

(IV),

in which

R, $R^1$, $R^2$ and X and n are as defined in claim 1.

4. A process for the production of polymers containing structural units corresponding to formula (IV), characterized in that the polymers claimed in claim 1 are hydrogenated.

5. Polymers having a molecular weight above 1,000 and containing structural units corresponding to formula (V)

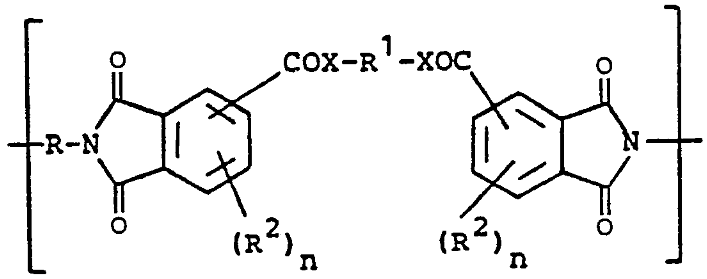

(V),

in which R, $R^1$, $R^2$ and X and n are as defined in claim 1, with the proviso that the radicals

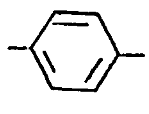 , 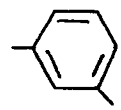 , 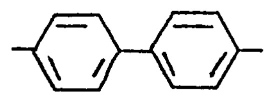 ,

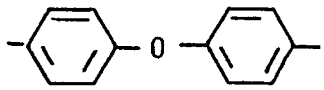 , 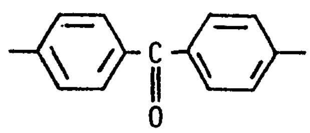 and

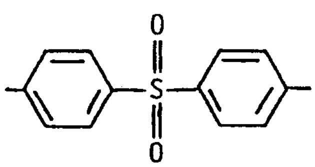

are excluded for $R^1$ and the radical $R^1$ cannot be a low molecular weight aromatic radical.

6. A process for the production of polymers containing structural units corresponding to formula (V), characterized in that the polymers claimed in claim 1 are dehydrogenated at a temperature of 100 to 350°C.

7. The use of the polymers claimed in claims 1, 3 and 5 for the production of films, coatings and mouldings.

**Revendications**

1. Polymères de poids moléculaire supérieur à 1000, comportant des motifs structuraux de formule (I)

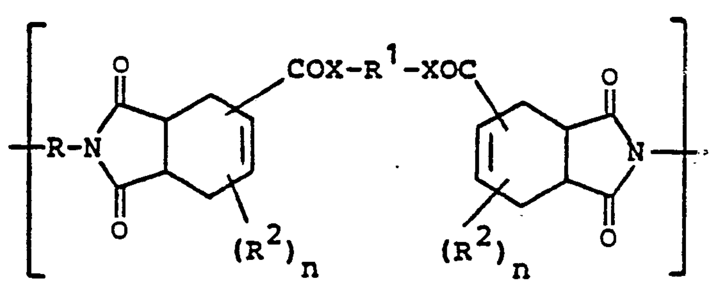

(I),

dans laquelle

X représente —O—, —S—, —NY—,

Y représente H, un groupe alkyle en $C_1$ à $C_3$, un groupe aryle en $C_6$ à $C_{10}$,

*n* est un nombre entier de 0 à 3,

$R^2$ représente H, un groupe alkyle en $C_1$ à $C_3$, aryle en $C_6$ à $C_{10}$, un halogène, un groupe alkoxy en $C_1$ à $C_3$ et

R et $R^1$ représentent un reste oligomérique ou polymérique organique bivalent de bas poids moléculaire.

2. Procédé de production de polymères suivant la revendication 1, caractérisé en ce qu'on fait réagir des bis-maléimides de formule (II)

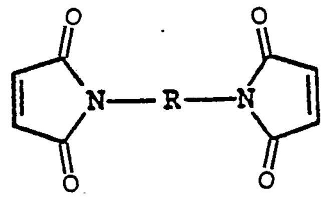

(II),

dans laquelle

R a la définition indiquée dans la revendication 1, le cas échéant sous catalyse, avec un dérivé d'acide bis-butadiénylcarboxylique de formule (III)

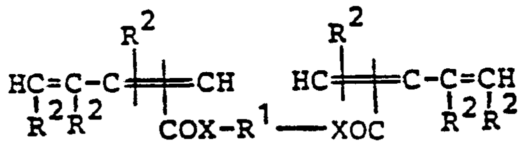

(III),

dans laquelle

R, $R^1$, $R^2$ et X ont la définition indiquée dans la revendication 1, dans des conditions de polyaddition à une température de 50 à 300°C pour former les polymères conformes à l'invention.

3. Polymères de poids moléculaire supérieur à 1000 présentant des motifs structuraux de formule (IV)

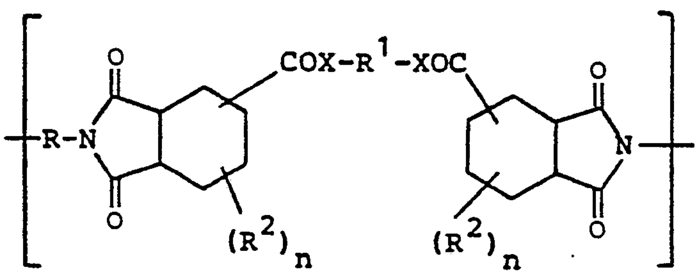

(IV),

dans laquelle

R, $R^1$, $R^2$, X et *n* ont la définition indiquée dans la revendication 1.

4. Procédé de production de polymères à motifs structuraux de formule (IV), caractérisé en ce qu'on hydrogène des polymères suivant la revendication 1.

5. Polymères de poids moléculaire supérieur à 1000, à motifs structuraux de formule (V)

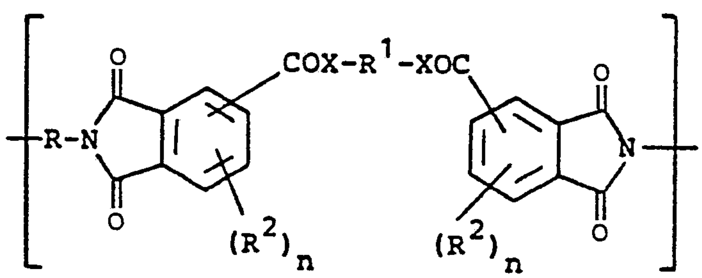

(V),

dans laquelle R, $R^1$, $R^2$, X et *n* ont la définition indiquée dans la revendication 1, les restes

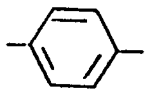 , 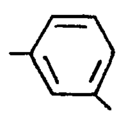 , 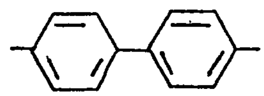 ,

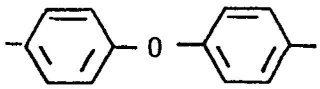 , 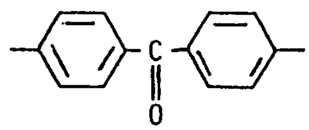 et

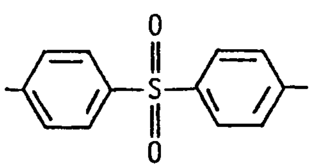

étant exclus pour $R^1$ et le reste $R^1$ ne pouvant pas être un reste aromatique de bas poids moléculaire.

6. Procédé de production de polymères à motifs structuraux de formule (V), caractérisé en ce qu'on déshydrogène à une température de 100 à 350°C des polymères selon la revendication 1.

7. Utilisation de polymères suivant les revendications 1, 3 et 5 pour la production de feuilles, de revêtements et de pièces moulées.